Europäisches Patentamt

**European Patent Office**

Office européen des brevets

(11) Numéro de publication: **0 210 109**
**A1**

(12) # DEMANDE DE BREVET EUROPEEN

(21) Numéro de dépôt: 86401617.5

(22) Date de dépôt: 18.07.86

(51) Int. Cl.⁴: **A 23 J 1/00**
**B 01 D 13/00**

(30) Priorité: 19.07.85 FR 8511109

(43) Date de publication de la demande:
28.01.87 Bulletin 87/5

(84) Etats contractants désignés:
AT BE CH DE GB IT LI LU NL SE

(71) Demandeur: ASSOCIATION POUR LA RECHERCHE ET LE DEVELOPPEMENT DES METHODES ET PROCESSUS INDUSTRIELS (ARMINES)
60, Boulevard Saint-Michel
F-75272 Paris Cédex 06(FR)

(72) Inventeur: Colinart, Pierre
8, rue des Coquarts
F-92220 Bagneux(FR)

(72) Inventeur: Renon, Henri
7, Square de Port-Royal
F-75013 Paris(FR)

(72) Inventeur: Trouvé, Gérard
19, rue Lamartine
F-91120 Palaiseau(FR)

(74) Mandataire: Bruder, Michel
10 rue de la Pépinière
F-75008 Paris(FR)

(54) **Procédé de séparation de protéines et d'acides gras, utilisable dans un procédé de fractionnement industriel de ces protéines.**

(57) Un procédé de fractionnement des protéines consiste à les précipiter au moyen d'un acide gas tel que l'acide caprylique. Pour récupérer les protéines dans des conditions douces et recycler l'acide gras, en vue d'obtenir des protéines purifiées et concentrées, on fait diffuser l'acide gras à travers un support poreux (3) imbibé d'une solution formant une membrane liquide non miscible, d'une part, avec la charge à traiter (6), constituée d'une solution d'acide gras et de protéines, laquelle est alimentée d'un côté (1) du support poreux (3) imbibé de la membrane liquide, et, d'autre part, avec une phase (4) réceptrice de l'acide gras laquelle est alimentée de l'autre côté (2) du support poreux (3).

EP 0 210 109 A1

La présente invention concerne un procédé de séparation de protéines et d'acides gras utilisable dans un procédé de fractionnement industriel de ces protéines en vue d'obtenir des protéines purifiées et concentrées.

Le fractionnement des protéines est une opération mise en oeuvre dans diverses industries à des fins de :

- valorisation de sous-produits (par exemple traitement de sang animal issu des abattoirs ; traitement du petit lait et sous-produits de l'industrie laitière).

-production de produits à usage thérapeutique : fractionnement du plasma humain.

-valorisation de produits d'origine végétale (pois, fèverole, colza,...).

En fonction de ces applications et des critères de qualité demandés pour les protéines obtenues, différentes techniques de séparation ont été développées.

La précipitation globale des protéines par "coagulation" à chaud ne fractionne pas les différentes protéines mais permet, à faible coût, de récupérer un ensemble de produits destinés généralement à l'alimentation animale.

L'ultrafiltration permet de séparer les protéines selon leur taille mais elle est essentiellement utilisée pour concentrer et purifier des solutions protéiques.

Les méthodes chromatographiques, encore au stade du développement industriel, permettent un fractionnement des protéines, selon leurs affinités, par un adsorbant solide. Très sensible à "l'empoisonnement" des adsorbants, cette technique prometteuse doit encore faire ses preuves sur le plan économique.

Les techniques industrielles de fractionnement les plus utilisées reposent sur une précipitation sélective des protéines, en fonction des conditions de pH, de force ionique, de la nature et de la concentration des agents précipitants. Le procédé le plus répandu dans le monde pour l'obtention de protéines plasmatiques est basé sur l'utilisation de l'éthanol (méthode de COHN). Ce procédé présente l'avantage d'être bien au point et de limiter les risques de contamination bactérienne. Il est toutefois onéreux du fait du

2         0210109

coût de l'éthanol et de la nécessité de travailler à froid, en dessous de 4°C.

D'autres agents précipitants ont été testés, certains à l'échelle industrielle, notamment les acides gras de 6 à 14 atomes de carbone et en particulier l'acide caprylique, qui présente l'avantage de permettre une séparation à température ambiante et d'être un agent stabilisant de nombreuses protéines. Toutefois, la récupération des protéines précipitées par l'acide caprylique pose de nombreux problèmes limitant l'utilisation de cet agent de précipitation. Une redissolution efficace des précipités nécessite des quantités importantes de sels qui peuvent dénaturer certaines protéines et conduit à des solutions diluées en protéines, ce qui nécessite, pour la plupart des applications, une étape de concentration supplémentaire.

Un but de la présente invention est de fournir un procédé permettant de récupérer les protéines dans des conditions douces, c'est-à-dire sans les altérer, et de recycler les acides gras utilisés pour le fractionnement de ces protéines.

A cet effet ce procédé de séparation de protéines et d'acides gras utilisés pour le fractionnement de ces protéines en vue d'obtenir des protéines purifiées et concentrées, est caractérisé en ce qu'on fait diffuser l'acide gras à travers un support poreux imbibé d'une solution formant une membrane liquide non miscible, d'une part, avec la charge à traiter, constituée d'une solution d'acide gras et de protéines, laquelle est alimentée d'un côté du support poreux imbibé de la membrane liquide, et, d'autre part, avec une phase réceptrice de l'acide gras laquelle est alimentée de l'autre côté du support poreux.

Le procédé à membrane liquide supportée suivant l'invention permet de faciliter la dissolution des précipités protéines-acide caprylique même à bas pH (pH 4,5 à 6), d'obtenir directement des solutions finales concentrées en protéines et de récupérer facilement tout ou partie de l'acide caprylique en vue d'un recyclage ultérieur.

Les solutions obtenues lors de la mise en oeuvre du procédé selon l'invention sont limpides et les protéines non dénaturées. Des rendements supérieurs à 90 % en protéines peuvent être obtenus.

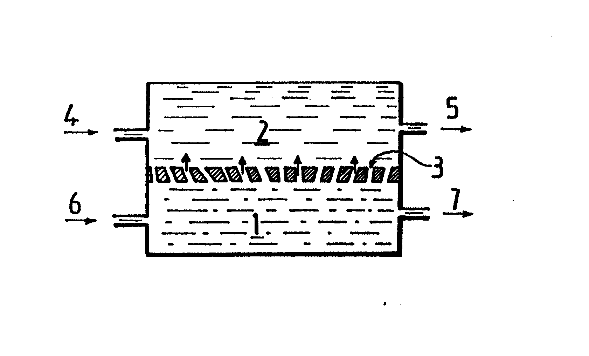

On décrira ci-après,à titre d'exemple non limitatif, une forme d'exécution de la présente invention,en référence au dessin annexé qui est une vue en coupe schématique d'un appareil à membrane liquide mettant en oeuvre le procédé suivant l'invention.

L'appareil mettant en oeuvre le procédé suivant l'invention qui est représenté sur le dessin, est constitué par un module à deux compartiments 1 et 2 séparés par un support poreux 3, lequel est imbibé d'une solution appelée membrane liquide non miscible avec une charge 6 que l'on désire traiter et une phase 4 appelée phase réceptrice. La charge 6 est constituée, par exemple, d'une suspension de précipité d'acide caprylique et de protéines dans une solution en générale aqueuse. La phase réceptrice 4 est destinée à accumuler l'acide caprylique qui a diffusé à travers la membrane liquide : on préférera des phases réceptrices dans lesquelles l'acide caprylique est très fortement soluble (par exemple des solutions aqueuses basiques) ou bien dans lesquelles cet acide peut être fortement complexé par un agent complexant adéquat ou encore peut être précipité sous forme d'un sel insoluble (par exemple sel de calcium, magnésium, fer, zinc,...). L'acide caprylique doit de plus être facilement récupéré dans la phase réceptrice soit par évaporation de celle-ci, soit par filtration soit par tout autre moyen de séparation connu.

Les solutions sortant du module sont, d'une part, une solution 5, sortant du compartiment 2, riche en acide caprylique et qui est dirigée vers une unité de récupération de cet acide et, d'autre part, une solution 7, sortant du compartiment 1, riche en protéines solubilisées.

Le support poreux 3 doit présenter les caractéristiques suivantes :

-forte densité de pores (de préférence supérieure à 75%);

-faible diamètre de pores (de préférence ne dépassant pas le micron);

- épaisseur minimale (de préférence inférieure à 200 microns);

-être constitué d'au moins un matériau préférentiellement mouillé par la membrane liquide, tel que, par exemple, polytétrafluoroéthylène, polyfluorovinylidène, polymères hydrophobes pour des membranes liquides organiques, polycarbonate, cellulose ou tout autre polymère hydrophile dans le cas de membranes liquides hydrophiles;

-présenter une surface maximale

Le procédé suivant l'invention présente l'avantage de permettre la redissolution des protéines dans le milieu même où elles ont été précipitées, c'est-à-dire sans changement de pH ni de salinité. Il permet le recyclage des acides gras et donc un gain important sur le coût du fractionnement. Il est de plus facilement automatisable.

On donnera ci-dessous, à titre d'illustration, quelques exemples non limitatifs de mise en oeuvre du procédé selon l'invention.

Exemple 1

Le support poreux est une membrane en polytétrafluoroéthylène (diamètre de pore 0,5 micron, épaisseur 100 microns). La surface d'échange dans le module utilisé est de $7cm^2$.

La membrane liquide est constituée d'une paraffine fluide à usage médical : (viscosité 14 cP à $20^oC$, indice de réfraction 1,457, point éclair : $160^0C$). La phase réceptrice est constituée par $90cm^2$ d'une solution de soude 0,6 N.

La charge à traiter est constituée par 3g d'un précipité d'acide caprylique et d'albumine humaine broyé pendant 5 secondes dans un broyeur ménager. La composition pondérale de ce précipité est approximativement :

- albumine 33%
- acide caprylique 33%
-humidité 33%

Le précipité est maintenu en suspension dans $87cm^3$ d'une solution d'acétate de sodium 0,06 M à pH 4,90. Les phases des deux compartiments 1 et 2 sont agitées mécaniquement. La température est maintenue à 20°C.

Le tableau 1 ci-dessous donne les évolutions des concentrations dans les deux compartiments 1 et 2 et permet de calculer un flux de production de protéine égal à 55g/m$^2$.h.

Le rendement en acide caprylique exrait est d'environ 60% au bout de 6 heures.

TABLEAU 1

| | Compartiment 1 | | | | Compartiment 2 | | | |
|---|---|---|---|---|---|---|---|---|
| TEMPS (h) | 2 | 4 | 6 | 24 | 2 | 4 | 6 | 24 |
| Albumine (g/l) | 0,38 | 1,50 | 3,09 | 8,02 | 0,08 | 0,15 | 0,22 | 0,28 |
| Acide caprylique (mmole/l) | 9,58 | 10,3 | 11,1 | 50,1 | 21,2 | 32,8 | 45,4 | 54,7 |
| pH | 4,88 | 5,03 | 5,23 | 10 | - | - | - | |
| % d'albumine solubilisé | 4 | 16 | 32 | 84 | - | - | - | |

Exemple 2 :

Le support poreux est ici une membrane en fluorure de polyvinylène (diamètre de pore 0,22 micron, épaisseur 100 microns). Cette membrane est prise en sandwich entre deux supports hydrophiles très poreux lui conférant de bonnes propriétés mécaniques, d'épaisseur voisine de 100 microns chacun. L'ensemble se présente sous la forme d'une cartouche cylindrique contenant 0,7m$^2$ de membrane plissée. La membrane liquide est constituée de paraffine fluide. La solution réceptrice est un lait de magnésie à 59,2g/l en magnésie, pH 10,2 ; volume 294 cm$^3$. La charge à traiter est constituée de 25g d'un précipité d'albumine broyé au broyeur ménager, en

suspension dans 575 cm$^3$ d'une solution d'acétate de sodium 0,06 N, glucose 1,2 g/l à pH 4,8. La température est maintenue à 20°C.

Le tableau 2 ci-dessous montre que 59 % de l'albumine sont dissous au bout de 6h 30 et qu'il n'y a pas de perte en albumine vers la phase réceptrice. On observe peu d'acide caprylique libre en phase réceptrice puisque celui-ci est précipité sous forme de sel de magnésium insoluble.

TABLEAU 2

| | Compartiment 1 | | | | Compartiment 2 | | | |
|---|---|---|---|---|---|---|---|---|
| TEMPS (h) | 0 | 2,5 | 4,5 | 6,5 | 0 | 2,5 | 4,5 | 6,5 |
| Albumine (g/l) | 0,8 | 3,0 | 7,6 | 11,0 | 0,2 | 0,2 | 0,2 | 0,3 |
| Acide caprylique (mmole/l) | 0,6 | 6,7 | 7,3 | 6,6 | 0,3 | 0,3 | 0,7 | 1,7 |
| pH | 4,81 | 4,76 | 4,77 | 4,81 | 10,10 | 9,93 | 10,04 | 9,83 |
| Glucose(g/l) | 8,93 | 8,62 | 8,71 | 8,67 | 0 | 0 | 1,7 x10$^{-3}$ | 1,9 x10$^{-3}$ |
| % d'albumine solubilisé | 4 | 16 | 41 | 59 | - | - | - | |

## Exemple 3:

Le support poreux est une membrane hydrophile en polycarbonate d'épaisseur 30 microns environ, de diamètre de pore 1 micron. La membrane liquide est une paraffine fluide. La phase réceptrice est une solution de soude de 0,06 N ($90cm^3$). Le compartiment 1 contient une solution d'acétate de sodium 0,06 M, pH 4,9.

A bout de cinq minutes les pH se sont égalisés dans les deux phases traduisant la non étanchéité de la membrane liquide et la mauvaise adhérence de la phase huileuse sur ce type de support. Aucune dissolution de précipité n'est observée.

## Exemple 4:

Le support 3 est une membrane en polycarbonate hydrophobe plissée de $4m^2$ (diamètre des pores 0,22 micron, épaisseur 30 microns) en sandwhich entre deux supports hydrophiles poreux. L'ensemble constitue une cartouche cylindrique. La phase réceptrice est une solution d'acétate de sodium 0,06 M dont le pH est maintenu voisin de 9,5 par ajout de soude. La phase à traiter dans le compartiment 1 est une solution d'acétate de sodium 0,06 M dont le pH est régulé à 6 et dans laquelle sont ajoutés 54g d'un précipité d'albumine et d'acide caprylique. La température est de 20°C.

Le tableau 3 ci-dessous montre l'évolution des concentrations dans les deux compartiments. On ne constate pratiquement pas de fuite en albumine dans le compartiment 2. On observe une concentration importante d'acide caprylique dans le liquide organique qui sert de membrane.

TABLEAU 3

| | Compartiment 1 | | | | Compartiment 2 | | | |
|---|---|---|---|---|---|---|---|---|
| TEMPS (h) | 1 | 2 | 3 | 20 | 1 | 2 | 3 | 20 |
| Albumine (g/l) | 3,1 | 9,6 | 11,7 | 18,8 | 0,09 | 0,10 | 0,12 | 0,29 |
| Acide caprylique (mmole/l) | 34 | 41 | 47 | 51 | 0 | 0 | 4 | 15 |
| % d'albumine dissout | 15 | 48 | 58 | 93 | - | - | - | - |

Exemple 5 :

Dans un premier temps on montre que, dans les conditions de l'expérience, il n'est pas possible de disssoudre 2g d'un précipité d'albumine et d'acide caprylique dans 50g d'une solution d'acétate de sodium 0,06 M pH 4,9. Pour cela le précipité est vigoureusement dispersé dans la solution d'acétate de sodium pendant 2 heures. Aucune concentration d'albumine soluble ne peut être détectée après ce traitement alors que l'acide caprylique a atteint une concentration d'équilibre voisine de 15 mmole/l.

On met alors en contact cette charge avec un système membrane liquide - phase réceptrice et on suit l'évolution des concentrations dans la charge (compartiment 1) et dans la phase réceptrice (compartiment 2).

Dans cet exemple, le support poreux est une membrane de 9 cm² en polytétrafluoroéthylène sur trame de polyéthylène haute densité. Le diamètre des pores est de 0,5 micron l'épaisseur d'environ 125 microns. Il est imprégné par 0,2g d'une phase organique constituée d'un alcool gras fluoré de formule $C_6F_{13}-C_2H_4-OH$. La charge à traiter 6 est constituée de 2g d'un précipité (contenant 45% d'albumine plasmatique ; 31% d'acide caprylique ; 24% d'eau) mis en suspension dans 50g d'un tampon d'acétate de sodium 0,06 mole/l, pH 5,97. La phase réceptrice 4 (80g) est une solution 0,2 molaire de glycine dont le pH est régulé à 9 par de la soude. Elle contient initialement 3 g/l de glucose.

Le tableau 4 ci-dessous indique les évolutions des concentrations dans les deux phases.

### TABLEAU 4

| Compartiment 1 | | | | | |
|---|---|---|---|---|---|
| TEMPS (h) | 0 | 2 | 3 | 4 | 5 |
| Acide caprylique (mmole/l) | 15,3 | 13,7 | 12,4 | 10,1 | 5,96 |
| Albumine (g/l) | 0 | 0 | 0,18 | 0,98 | 4,36 |
| pH | 4,72 | 5,07 | 4,82 | 5,10 | 5,52 |
| % d'albumine solubilisé | 0 | 0 | 1 | 5 | 24 |

| Compartiment 2 | | | | | |
|---|---|---|---|---|---|
| TEMPS (h) | 0 | 2 | 3 | 4 | 5 |
| Acide caprylique (mmole/l) | 0 | 10,5 | 16,4 | 21,1 | 24,5 |
| Albumine (g/l) | 0 | — | — | — | 0,2 |
| pH | 8,98 | — | — | — | 9,10 |
| % d'albumine solubilisée | — | — | — | — | — |

45% de l'acide caprylique introduit se retrouvent dans la phase réceptrice au bout de 5 heures alors que 24% de l'albumine ont été dissous dans le compartiment 1.

Le flux d'acide caprylique arrivant dans la phase réceptrice est égal à 64 g/h.m$^2$. Après un temps de retard, l'albumine se dissout avec une vitesse voisine de 0,18 g/h dans les conditions de l'expérience.

Exemple 6 :

Le module expérimental, le support 3, la charge à traiter et la phase réceptrice sont identiques à ceux décrits dans l'exemple 5.

La membrane liquide est constituée par 0,14 g de "tridécanol", un mélange d'alcools ramifiés à 13 carbones.

Le tableau 5 ci-dessous donne les résultats observés.

TABLEAU 5

| Compartiment 1 | | | | | |
|---|---|---|---|---|---|
| TEMPS (h) | 0 | 2 | 3 | 4 | 5 |
| Acide caprylique (mmole/l) | 14,0 | 8,8 | 6,2 | 4,4 | 3,66 |
| Albumine (g/l) | 0 | 0,31 | 1,79 | 3,26 | 4,12 |
| pH | 4,82 | 5,32 | - | 5,1 | 5,6 |
| % d'albumine dissout | 0 | 2 | 10 | 18 | 23 |

| Compartiment 2 | | | | | |
|---|---|---|---|---|---|
| TEMPS (h) | 0 | 2 | 3 | 4 | 5 |
| Acide caprylique (mmole/l) | 0 | 11,5 | 16,5 | 19,3 | 20,9 |
| Albumine (g/l) | 0 | - | - | - | 0,2 |
| pH | 8,96 | - | - | - | 9,08 |
| % d'albumine dissous | - | - | - | - | - |

Exemple 7:

Le module expérimental, le support, la charge et la phase réceptrice utilisés sont ceux décrits dans l'exemple 5. La membrane liquide est constituée par 0,14g d'huile de silicone.

Le tableau 6 ci-dessous donne l'évolution des concentrations avec le temps.

## TABLEAU 6

| | | | | | |
|---|---|---|---|---|---|
| Compartiment 1 | | | | | |

| TEMPS (h) | 0 | 2 | 3 | 4 | 5 |
|---|---|---|---|---|---|
| Acide capry-lique (mmole/l) | 15,0 | 11,9 | 9,8 | 8,1 | 6,3 |
| Albumine (g/l) | 0,05 | 0,05 | 0,35 | 1,4 | 2,5 |
| pH | 4,70 | 5,27 | - | - | 5,44 |
| % d'albumine dissout | 0 | 0 | 2 | 8 | 14 |

| | | | | | |
|---|---|---|---|---|---|
| Compartiment 2 | | | | | |

| TEMPS (h) | 0 | 2 | 3 | 4 | 5 |
|---|---|---|---|---|---|
| Acide capry-lique (mmole/l) | 0 | 8,1 | 11,4 | 14,0 | 14,6 |
| Albumine (g/l) | 0 | - | - | - | 0,09 |
| pH | 9,00 | - | - | - | 9,07 |
| % d'albumine solubilisée | - | - | - | - | - |

27% de l'acide caprylique sont récupérés dans la phase réceptrice

14% de l'albumine se retrouvent sous forme dissoute dans le compartiment 1 au bout de 5 heures dans ces conditions.

Exemple 8 :

Le module expérimental, le support, la charge et la phase réceptrice sont ceux décrits dans l'exemple 5.

La membrane liquide est constituée par 0,17g d'un alcane fluoré de formule $C_8F_{17}-C_2H_5$.

Les concentrations mesurées sont données dans le tableau 7, ci-dessous. 33% de l'acide initial sont retrouvés en phase réceptrice mais seulement 2% de l'albumine sont solubilisés dans le compartiment 1 où une accumulation d'acide plus élevée que pour les exemples précédents peut également être observée.

TABLEAU 7

| | Compartiment 1 | | | | |
|---|---|---|---|---|---|
| TEMPS (h) : | 0 : | 2 : | 3 : | 4 : | 5 |
| (Acide capry-: | : | : | : | : | |
| lique | : | : | : | : | : |
| (moles/1) : | 13,4 : | 13,3 : | 13,4: | 12,8: | 13,7 |
| Albumine : | : | : | : | : | |
| (g/1) : | 0,08 : | 0,08: | 0,08: | 0,13: | 0,26 |
| pH : | 5,2 : | 5,2 : | 5,3 : | 5,3 : | 5,3 |
| % d'albumi-: | : | : | : | : | |
| ne : | : | : | : | : | |
| dissout : | 0 : | 0 : | 0 : | 0,7: | 1,4 |

| | Compartiment 2 | | | | |
|---|---|---|---|---|---|
| TEMPS (h) : | 0 : | 2 : | 3 : | 4 : | 5 |
| (Acide capry-: | : | : | : | : | |
| lique | : | : | : | : | : |
| (mmole/1) : | 0 : | 7,2 : | 11 : | 14,6: | 18 |
| Albumine : | : | : | : | : | |
| (g/1) : | 0 : | — : | — : | — : | 0,13 |
| pH : | 9,0 : | — : | — : | — : | 9,1 |
| % d'albumi-: | : | : | : | : | |
| ne : | : | : | : | : | |
| dissout : | — : | — : | — : | — : | — |

Exemple 9:

Le module expérimental contient le support poreux 3 qui est une membrane en polytétrafluoroéthylène de diamètre de pore 0,02 micron et d'épaisseur environ 400 microns. La membrane liquide est constituée de paraffine fluide. La phase réceptrice est une solution 0,2 molaire de glycine dont le pH est régulé à 9 (370g).       **0210109**

La charge est constituée d'un précipité de transférine plasmatique et d'acide caprylique dispersé dans 101g
d'une solution d'acétate de sodium 0,06 molaire à pH 4,97.
Au bout de 20 heures, le précipité s'est entièrement dissous
(100% de dissolution) et la concentration de la transférine
dans la charge est de 10,7g/l.

REVENDICATIONS

1.- Procédé de séparation de protéines et d'acides gras utilisable dans un procédé de fractionnement industriel de ces protéines dont le but est l'obtention de protéines purifiées et concentrées, caractérisé en ce qu'on fait diffuser l'acide gras à travers un support poreux (3) imbibé d'une solution formant une membrane liquide non miscible, d'une part, avec la charge à traiter (6), constituée d'une solution d'acide gras et de protéines, laquelle est alimentée d'un côté (1) du support poreux (3) imbibé de la membrane liquide, et, d'autre part, avec une phase (4) réceptrice de l'acide gras laquelle est alimentée de l'autre côté (2) du support poreux (3).

2.- Procédé suivant la revendication 1 caractérisé en ce qu'on utilise une phase réceptrice (4) dans laquelle l'acide gras est fortement soluble ou il peut être fortement complexé par un agent complexant ou bien encore il peut être précipité sous forme d'un sel insoluble.

3.- Procédé suivant la revendication 2 caractérisé en ce que le support poreux (3) a une forte densité de pores, de préférence supérieure à 75%, de faible diamètre de pores, de préférence inférieure au micron, et une épaisseur minimale de préférence inférieure à 200 microns.

4.- Procédé suivant la revendication 2 caractérisé en ce que le support poreux (3) est réalisé en un matériau mouillable par la membrane liquide, tel que, par exemple, polytétrafluoroéthylène, polyfluorovinylidène, polymères hydrophobes pour des membranes liquides organiques, polycarbonate, cellulose ou tout autre polymère hydrophile dans le cas de membranes liquides hydrophiles.

5.- Procédé suivant la revendication 2 caractérisé en ce qu'on emploie, comme acide gras, l'acide caprylique.

**0210109**

Numero de la demande

Office européen
des brevets

**RAPPORT DE RECHERCHE EUROPEENNE**

EP  86 40 1617

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | EP-A-0 077 924  (FRESENIUS)<br>* Revendications  1,3,7,10,11; page 5, alinéa 2; page 10, lignes 11-14; page 11, lignes 1-33; page 12, lignes 1-18; figure 1; page 17, lignes 23-27; page 18, lignes 1-24 * | 1-4 | A 23 J    1/00<br>B 01 D   13/00 |
| Y | | 5 | |
| | --- | | |
| Y | CHEMICAL ABSTRACTS, vol. 100, no. 21, 21 mai 1984, page 467, résumé no. 172769g, Columbus, Ohio, US; A.F.S.A. HABEEB et al.: "Preparation of human immunoglobulin by caprylic acid precipitation", & PREP. BIOCHEM. 1984, 14(1), 1-17<br>* Résumé * | 5 | |
| | ----- | | |

**DOMAINES TECHNIQUES RECHERCHES (Int Cl 4)**

A 23 J
B 01 D

Le present rapport de recherche a été établi pour toutes les revendications

| Lieu de la recherche<br>LA HAYE | Date d'achèvement de la recherche<br>03-11-1986 | Examinateur<br>PEETERS J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82